(19) Europäisches Patentamt
European Patent Office
Office européen des brevets

(11) **EP 2 771 218 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **12756758.4**

(22) Anmeldetag: **13.09.2012**

(51) Int Cl.:
*B60W 30/19* (2012.01)  *B60W 20/00* (2016.01)
*B60W 10/111* (2012.01)  *B60W 10/08* (2006.01)
*B60W 10/06* (2006.01)  *F16H 3/12* (2006.01)
*B60K 6/48* (2007.10)  *F16H 61/04* (2006.01)

(86) Internationale Anmeldenummer:
**PCT/EP2012/067939**

(87) Internationale Veröffentlichungsnummer:
**WO 2013/060526 (02.05.2013 Gazette 2013/18)**

(54) **VERFAHREN ZUM BETREIBEN EINES ANTRIEBSSTRANGS UND STEUERUNGSEINRICHTUNG**

METHOD FOR OPERATING A DRIVE TRAIN AND CONTROL DEVICE

PROCÉDÉ POUR FAIRE FONCTIONNER UNE CHAÎNE CINÉMATIQUE ET DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2011 DE 102011085109**

(43) Veröffentlichungstag der Anmeldung:
**03.09.2014 Patentblatt 2014/36**

(73) Patentinhaber: **ZF Friedrichshafen AG 88046 Friedrichshafen (DE)**

(72) Erfinder:
- **KALTENBACH, Johannes**
 **88048 Friedrichshafen (DE)**
- **MITTELBERGER, Christian**
 **88212 Ravensburg (DE)**
- **HAEBERLE, Viktor, Johannes**
 **89278 Nersingen (DE)**

(56) Entgegenhaltungen:
**EP-A2- 1 209 017       WO-A1-98/40647
WO-A1-2011/141233**

## Beschreibung

Die Erfindung betrifft ein Verfahren zum Betreiben eines Antriebsstrangs eines Hybridfahrzeugs nach dem Oberbegriff des Anspruchs 1. Des Weiteren betrifft die Erfindung eine Steuerungseinrichtung zur Durchführung des erfindungsgemäßen Verfahrens.

Ein Verfahren ist beispielweite gemäß dem Oberbegriff des Anspruchs 1 aus WO 2011/141233 A1 bekannt.

Die Hauptkomponenten eines Antriebsstrangs eines Hybridfahrzeugs sind ein Hybridantrieb und ein Getriebe. Das Getriebe wandelt Drehzahlen und Drehmomente und stellt so ein Zugkraftangebot des Hybridantriebs an einem Abtrieb des Antriebsstrangs bereit. Die hier vorliegende Erfindung betrifft ein Verfahren zum Betreiben eines Antriebsstrangs eines Hybridfahrzeugs, dessen Hybridantrieb zumindest eine elektrische Maschine und einen Verbrennungsmotor umfasst, und eine Steuerungseinrichtung zur Durchführung des Verfahrens. Zwischen den Verbrennungsmotor und einen Abtrieb ist ein automatisiertes Schaltgetriebe geschaltet. Die elektrische Maschine ist über eine Reibkupplung an eine Welle des automatisierten Schaltgetriebes gekoppelt.

In dem automatisierten Schaltgetriebe werden unter Unterbrechung des vom Hybridantrieb an dem Abtrieb bereitgestellten Antriebsmoments Schaltungen ausgeführt, nämlich derart, dass zunächst in einer ersten Phase das am Abtrieb bereitgestellte Antriebsmoment abgebaut, anschließend in einer zweiten Phase die eigentliche Schaltung ausgeführt und darauffolgend in einer dritten Phase am Abtrieb Antriebsmoment wieder aufgebaut wird. Die Ausführung der eigentlichen Schaltung bzw. des eigentlichen Gangwechsels im automatisierten Schaltgetriebe untergliedert sich in mehrere Teilphasen, nämlich in eine erste Teilphase, in welcher der Ist-Gang der auszuführenden Schaltung ausgelegt wird, in eine zweite Teilphase, in welcher eine Getriebewelle des automatisierten Schaltgetriebes synchronisiert wird, und in eine dritte Teilphase, in welcher nach der Synchronisierung der jeweiligen Getriebewelle der Ziel-Gang der auszuführenden Schaltung bzw. des auszuführenden Gangwechsels eingelegt wird.

Nach der Praxis erfolgt die Synchronisierung der zu synchronisierenden Getriebewelle über Synchronringe. Dabei können relativ lange Schaltzeiten auftreten.

Hiervon ausgehend liegt der vorliegenden Erfindung das Problem zu Grunde, ein neuartiges Verfahren zum Betreiben eines Antriebsstrangs und eine Steuerungseinrichtung zur Durchführung des Verfahrens zu schaffen.

Dieses Problem wird durch ein Verfahren gemäß Anspruch 1 und durch eine Steuerungseinrichtung gemäß Anspruch 14 gelöst.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1    ein Blockschaltbild eines ersten Antriebsstrangs zur Verdeutlichung des erfindungsgemäßen Verfahrens;

Fig. 2    ein Blockschaltbild eines zweiten Antriebsstrangs zur Verdeutlichung des erfindungsgemäßen Verfahrens;

Fig. 3    Diagramme zur weiteren Verdeutlichung des erfindungsgemäßen Verfahrens;

Fig. 4    weitere Diagramme zur weiteren Verdeutlichung des erfindungsgemäßen Verfahrens.

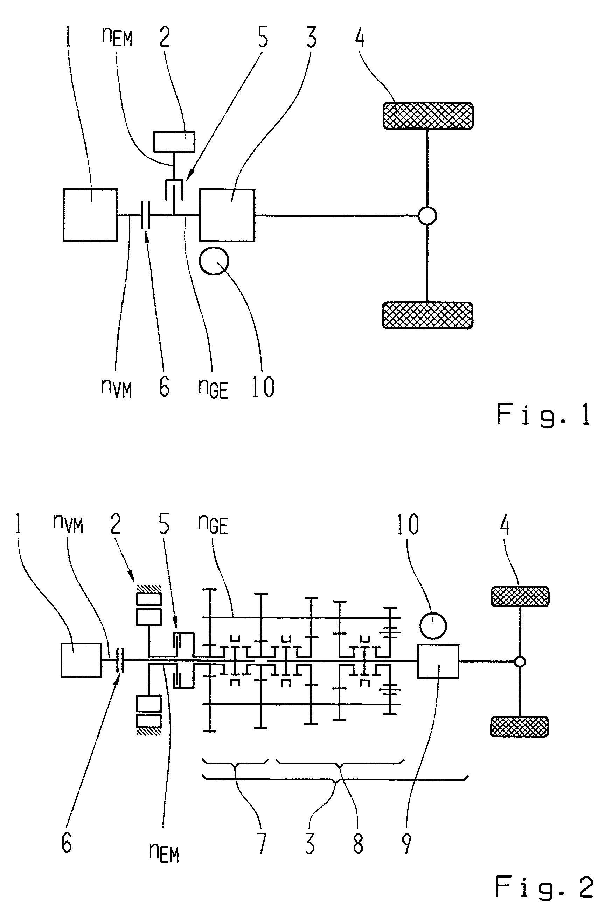

Fig. 1 zeigt ein erstes Antriebsstrangschema eines Hybridfahrzeugs, bei welchem das erfindungsgemäße Verfahren zum Einsatz kommen kann. So verfügt der Antriebsstrang der Fig. 1 über einen Verbrennungsmotor 1, eine elektrische Maschine 2, ein automatisiertes Schaltgetriebe 3 sowie einen Abtrieb 4, wobei das automatisierte Schaltgetriebe 3 zwischen den Verbrennungsmotor 1 und den Abtrieb 4 geschaltet ist. Ebenso ist das automatisierte Schaltgetriebe 3 zwischen die elektrische Maschine 2 und den Abtrieb 4 geschaltet.

In Fig. 1 greifen sowohl der Verbrennungsmotor 1 als auch die elektrische Maschine 2 des Hybridantriebs an einer Getriebeeingangswelle des automatisierten Schaltgetriebes 3 an. Gemäß Fig. 1 greift die elektrische Maschine 2 an der Getriebeeingangswelle des automatisierten Schaltgetriebes 3 über eine Reibkupplung 5 an. Der Verbrennungsmotor 1 greift an der Getriebeeingangswelle des automatisierten Schaltgetriebes 3 über eine Reibkupplung 6 an. Dann, wenn die Reibkupplung 5 geöffnet ist, ist die elektrische Maschine 2 vom Abtrieb 4 abgekoppelt. Dann, wenn die Reibkupplung 6 geöffnet ist, ist der Verbrennungsmotor 1 vom Abtrieb 4 abgekoppelt. Beim Antriebsstrang, der im Sinne der hier vorliegenden Erfindung betrieben werden soll, ist demnach die elektrische Maschine 2 durch Öffnen der Reibkupplung 5 vom Abtrieb 4 abkoppelbar, und zwar auch dann, wenn der Verbrennungsmotor 1 bei geschlossener Reibkupplung 6 an den Abtrieb 4 angekoppelt ist. Ebenso kann bei geöffneter Reibkupplung 6 der Verbrennungsmotor 1 vom Abtrieb 4 abgekoppelt und die elektrische Maschine 2 bei geschlossener Reibkupplung 5 an den Abtrieb 4 angekoppelt sein.

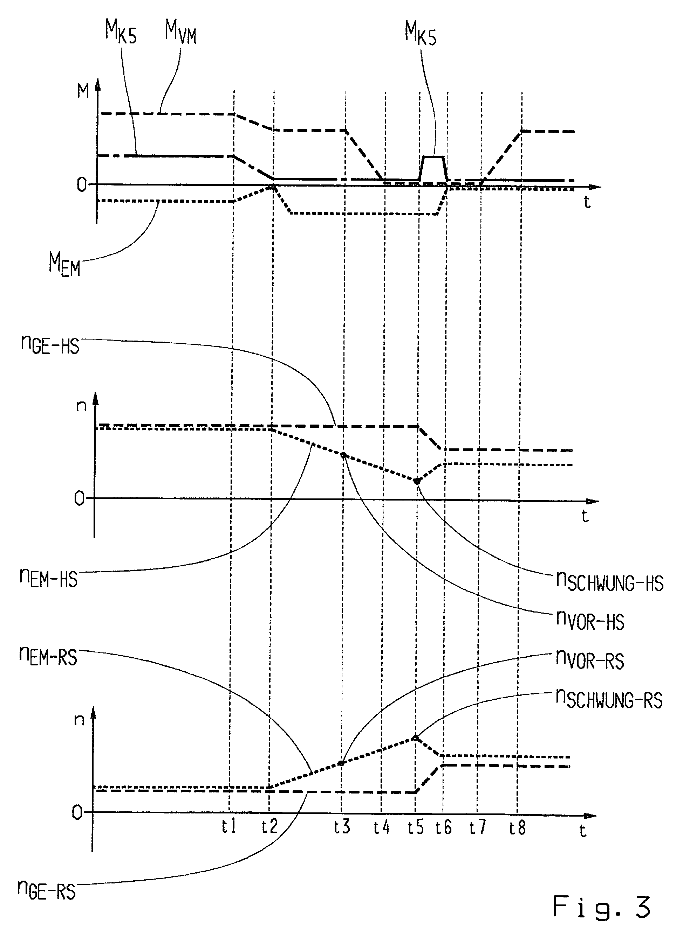

Wie bereits ausgeführt, handelt es sich beim Getriebe 3 um ein automatisiertes Schaltgetriebe. In dem automatisierten Schaltgetriebe 3 werden Schaltungen bzw. Gangwechsel unter Unterbrechung des vom Hybridantrieb am Abtrieb 4 bereitgestellten Antriebsmoments ausgeführt. Hierzu wird gemäß Fig. 3 in drei Phasen so vorgegangen, dass zunächst während einer ersten Phase zwischen den Zeitpunkten t1 und t4 das am Abtrieb 4 anliegende und vom Abtriebsaggregat bereitgestellte Antriebsmoment abgebaut wird, darauffolgend in einer zweiten Phase zwischen den Zeitpunkten t4 und t7 der eigentliche Gangwechsel ausgeführt wird, und anschließend in einer dritten Phase zwischen den Zeitpunkten t7 und t8 am Abtrieb 4 Antriebsmoment wieder aufgebaut wird. In der zweiten Phase wird zur Ausführung des eigentlichen Gangwechsels bzw. der eigentlichen Schaltung zunächst ein Ist-Gang der auszuführenden Schaltung ausgelegt, nämlich in Fig. 3 zwischen den Zeitpunkten t4 und t5, wobei nachfolgend zwischen den Zeitpunkten t5 und t6 das automatisierte Schaltgetriebe 3 unter Ausnutzen der Schwungmasse der elektrischen Maschine 2 synchronisiert wird, um anschließend an die Schwungsynchronisierung dieser Welle des automatisierten Schaltgetriebes 3 zwischen den Zeitpunkten t6 und t7 den Ziel-Gang der auszuführenden Schaltung bzw. des auszuführenden Gangwechsels einzulegen.

Diesbezügliche Details werden nachfolgend unter Bezugnahme auf Fig. 3 in größerem Detail beschrieben, wobei in Fig. 3 über der Zeit t mehrere zeitliche Kurvenverläufe gezeigt sind, nämlich ein Kurvenverlauf eines vom Verbrennungsmotor 1 bereitgestellten Moments $M_{VM}$, ein Kurvenverlauf eines von der elektrischen Maschine 2 bereitgestellten Moments $M_{EM}$, ein Kurvenverlauf eines von der Reibkupplung 5 übertragbaren Moments $M_{K5}$ sowie Kurvenverläufe einer Drehzahl $n_{EM-HS}$ und $n_{EM-RS}$ der elektrischen Maschine 2 und einer Drehzahl $n_{GE-HS}$ und $n_{GE-RS}$ der Welle des automatisierten Schaltgetriebes 3, an welche die elektrische Maschine 2 über die Reibkupplung 5 gekoppelt bzw. koppelbar ist, und zwar sowohl für eine Hochschaltung HS als auch für eine Rückschaltung RS.

In Fig. 3 wird ein Fall betrachtet, in welchem vor dem Zeitpunkt t1 der Antriebsstrang in einer Hybridfahrt betrieben wird, wobei gemäß Fig. 3 bei dieser Hybridfahrt der Verbrennungsmotor 1 am Abtrieb 4 ein positives Antriebsmoment $M_{VM}$ bereitstellt, wohingegen die elektrische Maschine 2 ein negatives Antriebsmoment $M_{EM}$ am Abtrieb 4 bereitstellt. Hierzu sind die Reibkupplungen 5, 6 vollständig geschlossen bzw. haftend.

Zum Zeitpunkt t1 wird mit der Ausführung des Verfahrens begonnen, wobei der Zeitpunkt t1 zum Beispiel dann vorliegt, wenn ein Fahrer entweder eine Schaltung auslöst oder wenn eine Schaltstrategie des Schaltgetriebes 3 eine bevorstehende Schaltung erkennt. Eine bevorstehende Schaltung kann von einer Getriebesteuerungseinrichtung steuerungsseitig zum Beispiel dadurch erkannt werden, dass ein Fahrerwunsch, ein zeitlicher Gradient einer Getriebeausgangsdrehzahl sowie ein zeitlicher Gradient einer Getriebeeingangsdrehzahl ausgewertet werden.

Beginnend mit dem Zeitpunkt t1 wird zunächst das von der elektrischen Maschine 2 am Abtrieb 4 bereitgestellte Antriebsmoment $M_{EM}$ abgebaut, und zwar gemäß Fig. 3 unter entsprechender Anpassung des vom Verbrennungsmotor 1 am Abtrieb 4 bereitgestellten Antriebsmoments $M_{VM}$. So kann Fig. 3 entnommen werden, dass im gezeigten Ausführungsbeispiel zwischen den Zeitpunkten t1 und t2 das generatorische Moment $M_{EM}$ der elektrischen Maschine 2 auf Null reduziert wird, wobei das von dem Verbrennungsmotor 1 bereitgestellte Antriebsmoment $M_{VM}$ um den Betrag des zuvor wirksamen generatorischen Moments $M_{EM}$ der elektrischen Maschine 2 reduziert wird.

Zwischen den Zeitpunkten t1 und t2, zwischen welchen also ein Lastabbau an der elektrischen Maschine 2 unter Lastübernahme durch den Verbrennungsmotor 1 erfolgt, wird gleichzeitig die Reibkupplung 5, über welche die elektrische Maschine 2 an die zu synchronisierende Welle des automatisierten Schaltgetriebes 3, nämlich im Ausführungsbeispiel der Fig. 1 an die Getriebeeingangswelle, gekoppelt ist, geöffnet, sodass zum Zeitpunkt t2 diese Reibkupplung 5 vollständig geöffnet ist. Das von derselben übertragbare Moment $M_{K5}$ beträgt dann in etwa Null.

Dann, wenn die Reibkupplung 5 vollständig geöffnet ist und kein Moment mehr überträgt, wird nachfolgend beginnend mit dem Zeitpunkt t2 zwischen den Zeitpunkten t2 und t3 die Drehzahl $n_{EM}$ der elektrischen Maschine 2 auf eine Vorbereitungsdrehzahl $n_{VOR}$ gebracht, wobei erst dann, wenn die Drehzahl $n_{EM}$ auf die Vorbereitungsdrehzahl $n_{VOR}$ gebracht wurde, auch das vom Verbrennungsmotor 1 bereitgestellte Antriebsmoment $M_{VM}$ abgebaut wird.

Im Ausführungsbeispiel der Fig. 3 erreicht die Drehzahl $n_{EM}$ der elektrischen Maschine 2 die Vorbereitungsdrehzahl $n_{VOR-HS}$ bzw. $n_{VOR-RS}$ sowohl bei Ausführung der Hochschaltung HS als auch bei Ausführung der Rückschaltung RS zum Zeitpunkt t3, sodass in Fig. 3 beginnend mit dem Zeitpunkt t3 das vom Verbrennungsmotor 1 am Abtrieb 4 bereitgestellte Antriebsmoment $M_{VM}$ abgebaut wird, nämlich zwischen den Zeitpunkten t3 und t4, sodass zum Zeitpunkt t4 der Momentabbau vollständig abgeschlossen ist und am Abtrieb 4 kein Antriebsmoment mehr anliegt. Mit dem Abbau des vom Verbrennungsmotor 1 am Abtrieb 4 bereitgestellten Antriebsmoments $M_{VM}$ wird demnach zum Zeitpunkt t3 erst dann begonnen, wenn die Drehzahl $n_{EM-HS}$ bzw. $n_{EM-RS}$ der elektrischen Maschine 2 auf die Vorbereitungsdrehzahl $n_{VOR-HS}$ bzw. $n_{VOR-RS}$ gebracht, nämlich bei einer Hochschaltung HS abgesenkt und bei einer Rückschaltung RS angehoben, wurde. Dies kann drehzahlgesteuert oder zeitgesteuert erfolgen.

Dann, wenn die Drehzahl $n_{EM}$ der elektrischen Maschine 2 zwischen den Zeitpunkten t2 und t3 auf die Vorbereitungsdrehzahl $n_{VOR}$ drehzahlgesteuert gebracht wird, wird die Drehzahl der elektrischen Maschine 2 ermittelt und mit einem entsprechenden Grenzwert verglichen.

Dann, wenn die Drehzahl $n_{EM}$ der elektrischen Maschine 2 diesen Grenzwert, welcher der Vorbereitungsdrehzahl entspricht, erreicht oder bei einer Hochschaltung HS unterschreitet bzw. bei einer Rückschaltung RS überschreitet, kann nachfolgend mit dem Abbau der vom Verbrennungsmotor 1 am Abtrieb 4 bereitgestellten Antriebsmoment $M_{VM}$ begonnen werden.

Alternativ ist es auch möglich, die Drehzahl $n_{EM}$ der elektrischen Maschine 2 zwischen den Zeitpunkten t2 und t3 zeitgesteuert auf die Vorbereitungsdrehzahl $n_{VOR}$ zu bringen. Bei einem solchen zeitgesteuerten Anheben oder Absenken der Drehzahl $n_{EM}$ auf die Vorbereitungsdrehzahl $n_{VOR}$ wird so vorgegangen, dass laufend eine Restzeit berechnet bzw. ermittelt wird, bis die Drehzahl $n_{EM}$ der elektrischen Maschine 2 eine bei einer Rückschaltung RS oberhalb der Vorbereitungsdrehzahl $n_{VOR-RS}$ liegende Schwungdrehzahl $n_{SCHWUNG-RS}$ eine bei einer Hochschaltung HS unterhalb der Vorbereitungsdrehzahl $n_{VOR-HS}$ liegende Schwungdrehzahl $n_{SCHWUNG-HS}$ erreicht. In Fig. 3 erreicht die Drehzahl $n_{EM}$ sowohl bei der Ausführung einer Hochschaltung HS als auch bei der Ausführung einer Rückschaltung RS die entsprechende Schwungdrehzahl $n_{SCHWUNG}$ zum Zeitpunkt t5.

Die ermittelte Restzeit wird mit einem Grenzwert verglichen, wobei dieser Grenzwert der Zeitdauer zwischen den Zeitpunkten t3 und t5 entspricht. Der Grenzwert, mit dem die ermittelte Restzeit verglichen wird, entspricht also der Zeit, die zum Lastabbau am Verbrennungsmotor 1 zwischen den Zeitpunkten t3 und t4 und zum Gangauslegen des Ist-Gangs der auszuführenden Schaltung zwischen den Zeitpunkten t4 und t5 benötigt wird.

Die Restzeit, die beim zeitgesteuerten Anheben oder Absenken der Drehzahl $n_{EM}$ auf die Vorbereitungsdrehzahl $n_{VOR}$ ermittelt und mit dem Grenzwert verglichen wird, ergibt sich aus dem zeitlichen Gradienten der Drehzahl $n_{EM}$ der elektrischen Maschine 2 und dem erwarteten Momentverlauf der elektrischen Maschine 2, nämlich aus dem von der elektrischen Maschine 2 maximal bereitstellbaren Moment. Dieses von der elektrischen Maschine 2 zum Beschleunigen derselben bereitstellbare, maximale Moment hängt von der Drehzahl $n_{EM}$ der elektrischen Maschine 2 und von der Leistungsfähigkeit bzw. vom Ladezustand des mit der elektrischen Maschine 2 zusammenwirkenden, elektrischen Energiespeichers ab.

Dann, wenn die elektrische Maschine 2 die Vorbereitungsdrehzahl $n_{VOR}$ erreicht hat, was in Fig. 3 zum Zeitpunkt t3 der Fall ist, wird nachfolgend, wie bereits ausgeführt, zwischen den Zeitpunkten t3 und t4 am Verbrennungsmotor 1 der Lastabbau ausgeführt, wobei gleichzeitig die Kupplung 6 geöffnet wird, sodass zum Zeitpunkt t4 die Kupplung 6 vollständig geöffnet und der Verbrennungsmotor 1 vom Abtrieb 4 abgekoppelt ist.

Bei geöffneter Kupplung 5 und geöffneter Kupplung 6 wird nachfolgend zwischen den Zeitpunkten t4 und t5 die Drehzahl $n_{EM}$ der elektrischen Maschine 2 bei einer Hochschaltung HS weiter abgesenkt und bei einer Rückschaltung RS weiter angehoben, nämlich in Richtung auf die bei einer Rückschaltung RS oberhalb der Vorbereitungsdrehzahl $n_{VOR-RS}$ oder bei einer Hochschaltung HS unterhalb der Vorbereitungsdrehzahl $n_{VOR-HS}$ liegende Schwungdrehzahl $n_{SCHWUNG-RS}$ bzw. $n_{SCHWUNG-HS}$. Zwischen den Zeitpunkten t4 und t5 wird auch der Ist-Gang der auszuführenden Schaltung ausgelegt.

Nachfolgend an den Zeitpunkt t5, also anschließend an das Erreichen der Schwungdrehzahl $n_{SCHWUNG}$, erfolgt zwischen den Zeitpunkten t5 und t6 die Schwungsynchronisierung einer zu synchronisierenden Welle des automatisierten Schaltgetriebes 3. Dann, wenn die Drehzahl $n_{EM}$ der elektrischen Maschine 2 die Schwungdrehzahl $n_{SCHWUNG}$ erreicht hat, was in Fig. 3 zum Zeitpunkt t5 der Fall ist, wird nachfolgend die Reibkupplung 5, über welche die elektrische Maschine 2 an das automatisierte Schaltgetriebe 3 gekoppelt bzw. koppelbar ist, geschlossen und drauffolgend wieder geöffnet, um zwischen den Zeitpunkten t5 und t6 die Schwungsynchronisierung der zu synchronisierenden Welle des Getriebes 3 durchzuführen.

Das Schließen der Reibkupplung 5 zur Schwungsynchronisierung des automatisierten Schaltgetriebes 3 erfolgt derart, dass das von der Reibkupplung 5 übertragbare Moment $M_{K5}$ derart erhöht wird, dass die Reibkupplung 5 schlupfend bzw. rutschend Moment überträgt. Das von der Reibkupplung 5 übertragene Moment bewirkt die Schwungsynchronisierung der zu synchronisierenden Welle des automatisierten Schaltgetriebes 3, wobei hierbei Moment an der Trägheitsmasse der elektrischen Maschine 2 abgestützt wird.

Das nachfolgende Öffnen der Reibkupplung 5 bei der Schwungsynchronisierung erfolgt vor Beendigung der Synchronisierung, wobei die Reibkupplung 5 nach dem Schließen derselben vorzugsweise dann geöffnet wird, wenn eine Differenzdrehzahl zwischen einer Drehzahl der zu synchronisierenden Welle des automatisierten Schaltgetriebes 3 und einer vorgegebenen Synchrondrehzahl kleiner als ein vorgegebener Grenzwert ist. Zur Bestimmung des Öffnungszeitpunkts für die Reibkupplung 5 kann ein zeitlicher Gradient der aktuellen Differenzdrehzahl zwischen der Drehzahl der zu synchronisierenden Welle des Schaltgetriebes 3 und der Synchrondrehzahl überwacht werden, um ein rechtzeitiges Öffnen der Reibkupplung 5 zu gewährleisten.

Das Schließen der Reibkupplung 5 zur Synchronisierung einer zu synchronisierenden Welle des automatisierten Schaltgetriebes 3 unter Erhöhung des von derselben übertragbaren Moments $M_{K5}$ ist in Fig. 3 zwischen den Zeitpunkten t5 und t6 gezeigt, wobei in der Variante der Fig. 3 nach dem schlupfenden bzw. rutschenden Schließen der Reibkupplung 5 unter Erhöhung des von derselben übertragbaren Moments $M_{K5}$ anschließend die Reibkupplung 5 derart vollständig geöffnet wird, dass das von derselben übertragbare Moment $M_{K5}$ auf Null bzw. in etwa Null reduziert wird. Dann, wenn zum Zeitpunkt t6 die Schwungsynchronisierung des automatisierten Schaltgetriebes 3 abgeschlossen ist, wird zwischen den Zeitpunkten t6 und t7 der Ziel-Gang der auszuführenden Schaltung eingelegt. Hierbei belastet in der Variante der Fig. 3, da die Reibkupplung 5 vollständig geöffnet ist und kein Moment überträgt, die Trägheitsmasse der elektrischen Maschine 2 nicht ein dem Einlegen des Ziel-Gangs der auszuführenden Schaltung dienendes Gangschaltelement.

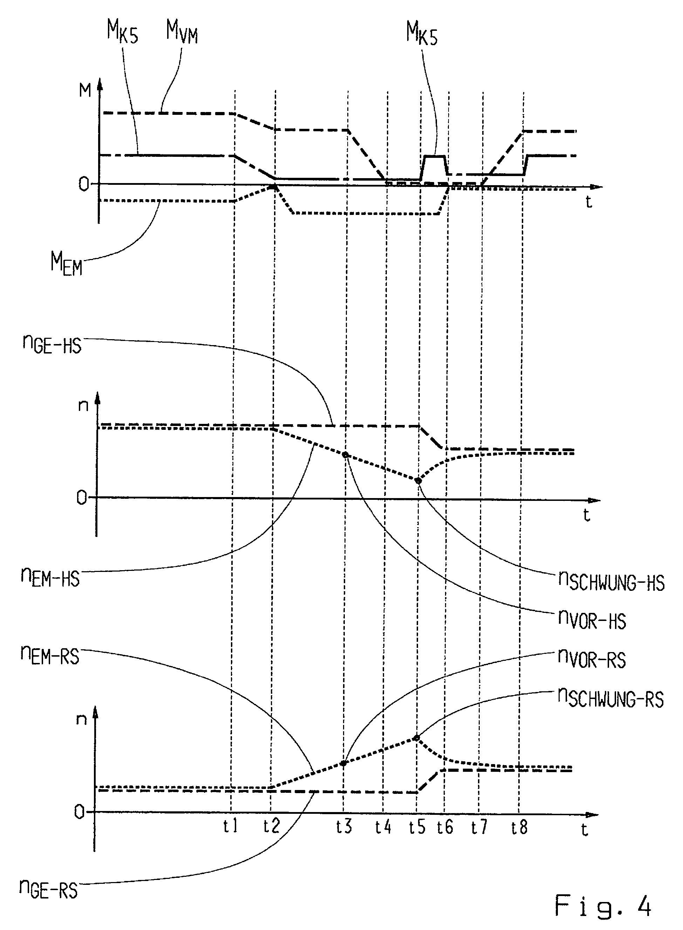

Fig. 4 zeigt eine Variante der Erfindung, in welcher nach einem Gangauslegen des Ist-Gangs der Schaltung und vor einem Gangeinlegen des Ziel-Gangs der Schaltung zur Schwungsynchronisierung das von der Reibkupplung 5 übertragbare Moment $M_{K5}$ nach der Erhöhung desselben anschließend nicht auf Null reduziert wird. Vielmehr wird in der Variante der Fig. 4 die Reibkupplung 5 nach dem schlupfenden Schließen derselben und unter Erhöhung des von derselben übertragbaren Moments $M_{K5}$ nachfolgend derart teilweise geöffnet, dass das von derselben übertragbare Moment $M_{K5}$ auf einen Betrag größer als Null reduziert wird. Dies kann in Fig. 4 dem Verlauf des von der Kupplung 5 übertragbaren Moments $M_{K5}$ entnommen werden.

Nach einer vorteilhaften Weiterbildung kann während des Schließens der Reibkupplung 5 über die elektrische Maschine 2 ein Moment aufgebracht werden, nämlich derart, dass zum Ende der Synchronisierung an der Reibkupplung 5 immer eine Differenzdrehzahl vorhanden ist. Sollte bei der Schwungsynchronisierung die Kupplung 5 unerwünscht ins Haften kommen, bevor die Synchrondrehzahl erreicht ist, wird vorzugsweise mit der elektrischen Maschine 2 die Drehzahl derart korrigiert, dass nachfolgend an der Kupplung 5 wieder ein Schlupf vor dem Einlegen des Ziel-Gangs der auszuführenden Schaltung vorliegt. Beim erfindungsgemäßen Verfahren wird zur Schwungsynchronisierung demnach die Reibkupplung 5 so betrieben, dass dieselbe nicht ins Haften kommt. Sollte dieselbe dennoch unerwünscht ins Haften kommen, so wird über das Moment der elektrischen Maschine 2 die Drehzahl an der Reibkupplung 5 korrigiert, um dieselbe wieder in einen schlupfenden bzw. rutschenden Betrieb vor dem Einlegen des Ziel-Gangs der auszuführenden Schaltung zu überführen.

In der Variante der Fig. 4, in welcher die Reibkupplung 5 nach der Schwungsynchronisierung nicht vollständig, sondern lediglich teilweise geöffnet wird und daher noch Moment übertragen kann, ist die Trägheitsmasse der elektrischen Maschine 2 ebenfalls abgekoppelt, sodass auch hier ein Schaltstoß gegenüber einer haftenden Reibkupplung verringert werden kann. Ein weiterer Vorteil der Variante der Fig. 4 besteht darin, dass Zahn-auf-Zahn Stellungen im Schaltgetriebe 3 über das von der Reibkupplung 5 übertragene Moment aufgelöst werden können. Da in der Variante der Fig. 4 die Reibkupplung vor dem Einlegen des Ziel-Gangs der auszuführenden Schaltung nicht ganz geöffnet wird, ist ein Zeitgewinn in der Schaltungsausführung realisierbar. In der Variante der Fig. 4 muss die Reibkupplung 5 jedoch regelbar sein.

In der Fig. 4 wird demnach die Reibkupplung 5 spätestens zum Zeitpunkt t6 nur teilweise wieder geöffnet, sodass dieselbe nach wie vor ein Moment überträgt. Dann, wenn der Ziel-Gang der auszuführenden Schaltung zwischen den Zeitpunkten t6 und t7 eingelegt wurde, kann die Reibkupplung 5 ins Haften kommen, wodurch eine Belastung von Schaltklauen des automatisierten Schaltgetriebes 3 reduziert werden kann. Nachdem die Kupplung 5 haftet, kann dieselbe vollständig geschlossen werden, d.h. das von derselben übertragbare Moment kann auf das maximal übertragbare Moment erhöht werden.

Beginnend mit dem Zeitpunkt t7 wird zwischen den Zeitpunkten t7 und t8 ein Lastaufbau am Verbrennungsmotor 1 durchgeführt, nämlich bei gleichzeitigem Schließen der Kupplung 6, wobei dann die Zugkraftunterbrechung am Abtrieb 4 endet. Optional kann die Reibkupplung 5 mit der elektrischen Maschine 2 synchronisiert, nachfolgend die Reibkupplung 5 geschlossen und an der elektrischen Maschine 2 ein Lastaufbau durchgeführt werden.

Die Schwungdrehzahl $n_{SCHWUNG}$, auf welche die elektrische Maschine 2 gebracht wird, wird vorzugsweise rechnerisch ermittelt, und zwar unter Verwendung der folgenden Gleichung:

$$n_{SCHWUNG} = \sqrt{\frac{(J_{EM} + J_{GE}) * n_{GE-ZIEL}^{2} - J_{GE} * n_{GE-IST}^{2}}{J_{EM}}} + \Delta n_{SCHWUNG}$$

Alternativ kann die Schwungdrehzahl $n_{SCHWUNG}$, auf welche die elektrische Maschine 2 gebracht wird, unter Verwendung der folgenden Gleichung errechnet werden:

$$n_{SCHWUNG} = \frac{J_{GE}}{J_{EM}} * (n_{GE-ZIEL} - n_{GE-IST}) + n_{GE-ZIEL} + \Delta n_{SCHWUNG}$$

In den obigen Gleichungen ist jeweils $J_{EM}$ die Massenträgheit der elektrischen Maschine, $J_{GE}$ die getriebeeingangsseitige Massenträgheit bezogen auf die zu synchronisierende Welle des automatisierten Schaltgetriebes, $n_{GE-IST}$ die Eingangsdrehzahl der zu synchronisierenden Welle des automatisierten Schaltgetriebes im Ist-Gang der Schaltung, $n_{GE-ZIEL}$ die Eingangsdrehzahl der zu synchronisierenden Welle des automatisierten Schaltgetriebes im Ziel-Gang der Schaltung, und $\Delta n_{SCHWUNG}$ ein optionaler Korrekturoffsetwert.

Bei der Eingangsdrehzahl $n_{GE-IST}$ der zu synchronisierenden Welle im Ist-Gang handelt es insbesondere um einen Messwert. Bei der Bestimmung der Eingangsdrehzahl $n_{GE-ZIEL}$ der zu synchronisierenden Welle im Ziel-Gang kann ein aktueller zeitlicher Gradient einer Abtriebsdrehzahl berücksichtigt werden, sodass eine Geschwindigkeitsänderung des Hybridfahrzeugs während der Dauer des Schaltablaufs berücksichtigt werden kann.

Mit dem optionalen Korrekturoffsetwert $\Delta n_{SCHWUNG}$ wird bei einer Hochschaltung die definierte Schwungdrehzahl reduziert und bei einer Rückschaltung die definierte Schwungdrehzahl erhöht. Hierdurch kann gewährleistet werden, dass an der Reibkupplung 5 eine Differenzdrehzahl zwischen $n_{EM}$ und $n_{GE}$ vorliegt, sodass die Reibkupplung 5 Moment übertragen kann. Durch den Korrekturoffsetwert wird also die Schwungdrehzahl so beeinflusst, dass am Ende der Synchronisierung eine Differenzdrehzahl zwischen $n_{EM}$ und $n_{GE}$ vorliegt und demnach nicht Null beträgt. Dieser Korrekturoffsetwert wird jedoch durch die hierbei an der Reibkupplung 5 entstehende Reibleistung begrenzt.

Die Berechnung der Schwungdrehzahl $n_{SCHWUNG}$ kann dadurch verbessert werden, dass zusätzlich die Schwungenergie berücksichtigt wird, die im Schlupfbetrieb der Reibkupplung 5, über welche die elektrische Maschine 2 an die zu synchronisierende Welle des automatisierten Schaltgetriebes 3 gekoppelt bzw. koppelbar ist, verloren geht.

Eine weitere Verbesserung in der Ermittlung der Schwungdrehzahl $n_{SCHWUNG}$ kann dadurch bewirkt werden, wenn Reibmomente, die bremsend wirken, berücksichtigt werden. Bei einer auszuführenden Hochschaltung wird in Folge von Reibung weniger Schwungenergie benötigt als bei vernachlässigter Reibung. Bei einer Rückschaltung hingegen wird auf Grundlage einer Reibung mehr Schwungenergie benötigt als bei vernachlässigter Reibung.

Ferner kann bei Ermittlung der Schwungdrehzahl $n_{SCHWUNG}$ ein von der elektrischen Maschine 2 elektrisch bereitstellbares Moment berücksichtigt werden, welches zur Synchronisierung der zu synchronisierenden Welle des automatisierten Schaltgetriebes 3 von der elektrischen Maschine 2 bereitgestellt werden kann, um im Schlupfbetrieb der Reibkupplung 5 über die elektrische Maschine 2 unterstützend einzugreifen. Bei einer Hochschaltung HS kann so die Schwungdrehzahl angehoben und bei einer Rückschaltung RS abgesenkt werden.

Nach einer vorteilhaften Weiterbildung der hier vorliegenden Erfindung kann eine Adaption für die Schwungdrehzahl $n_{SCHWUNG}$ erfolgen.

Dann, wenn im Anschluss an das Schließen der Reibkupplung 5, welches zwischen den Zeitpunkten t5 und t6 erfolgt, eine Synchrondrehzahl für den Ziel-Gang der auszuführenden Schaltung nicht erreicht wird, kann in diesem Zusammenhang die Schwungdrehzahl $n_{SCHWUNG}$ adaptiv angepasst werden, nämlich derart, dass dann, wenn die Synchrondrehzahl bei einer Hochschaltung oder Rückschaltung überschritten wurde, die Schwungdrehzahl mit einem negativen Offset-Wert korrigiert wird. Dann hingegen, wenn die Synchrondrehzahl des Ziel-Gangs bei einer Hochschaltung oder Rückschaltung unterschritten wurde, wird die Schwungdrehzahl mit einem positiven Offset-Wert korrigiert. Diese Offset-Werte sind abhängig von der auszuführenden Schaltung, insbesondere abhängig vom Ziel-Gang der auszuführenden Schaltung.

Das erfindungsgemäße Verfahren ist nicht nur im Antriebsstrang der Fig. 1 einsetzbar, sondern vielmehr auch beim Antriebsstrang der Fig. 2, welcher ein als Gruppenschaltgetriebe ausgebildetes, automatisiertes Schaltgetriebe aufweist. Wie Fig. 2 zeigt, umfasst das Gruppenschaltgetriebe 3 eine Vorschaltgruppe 7, ein Hauptgetriebe 8 und eine Nachschaltgruppe 9. Ein Gruppenschaltgetriebe kann neben dem Hauptgetriebe 8 auch ausschließlich eine Vorschaltgruppe 7 oder ausschließlich eine Nachschaltgruppe 9 umfassen. In Fig. 2 ist die elektrische Maschine 2 über eine Reibkupplung 5 an eine Vorgelegewelle des als Gruppenschaltgetriebe ausgebildeten, automatisierten Schaltgetriebes 3 koppelbar, wohingegen der Verbrennungsmotor 1 über die Kupplung 6 an die Eingangswelle des Gruppenschaltgetriebes 3 gekoppelt ist.

Im Ausführungsbeispiel der Fig. 2 ist die elektrische Maschine 2 über die Reibkupplung 5 an die Vorschaltgruppe 7 gekoppelt, nämlich ein Losrad der Vorschaltgruppe 7, welches mit einem auf der Vorgelegewelle gelagerten Festrad in Eingriff steht und mit demselben eine Übersetzungsstufe ausbildet. Beim Antriebsstrang der Fig. 2 erfolgt die Synchronisierung der Vorgelegewelle des Gruppengetriebes 3 über die elektrische Maschine 2 auf analoge Art und Weise wie im Ausführungsbeispiel der Fig. 1, in welchem über die elektrische Maschine 2 die Getriebeeingangswelle des automatisierten Schaltgetriebes 3 synchronisiert wurde. Im Ausführungsbeispiel der Fig. 2 handelt es sich bei der Drehzahl $n_{GE}$ nicht um die Drehzahl der Getriebeeingangswelle, sondern vielmehr um die Drehzahl der zu synchronisierenden Vorgelegewelle.

Im Unterschied zum Ausführungsbeispiel der Fig. 2 ist es auch möglich, dass die elektrische Maschine 2 jeweils über die Reibkupplung 5 in ein Losrad des Hauptgetriebes 8 oder direkt an die Vorgelegewelle gekoppelt ist. Unter Ausnutzung der Erfindung kann bei Gruppengetrieben auf eine sonst üblicherweise vorhandene Getriebebremse verzichtet werden. Es sind gleichzeitige Schaltungen im Hauptgetriebe 8 und in der Vorschaltgruppe 7 möglich. Auch bei Gruppengetrieben kann eine benötigte Schaltzeit verkürzt werden.

Ferner ist das erfindungsgemäße Verfahren auch dann einsetzbar, wenn beim Antriebsstrang der Fig. 1 zwischen die Reibkupplung 5 und die elektrische Maschine 2 eine optionale, nicht gezeigte Konstantübersetzung geschaltet ist.

Ferner kann eine zusätzliche Schwungmasse mit der elektrischen Maschine 2 gekoppelt werden, um die Schwungmasse derselben zu erhöhen.

Die Erfindung betrifft weiterhin eine elektrische bzw. elektronische Steuerungseinrichtung 10, die Mittel zur Durchführung des Verfahrens aufweist, nämlich mindestens einen Prozessor, mindestens einen Speicher und mindestens eine Kommunikationsschnittstelle. Bei der Steuerungseinrichtung 10 kann es sich um ein Hybridsteuergerät oder ein Getriebesteuergerät handeln. Die Steuerungseinrichtung 10 ermittelt als Ausgangsgrößen Stellgrößen für das Ansteuern zumindest der elektrischen Maschine 2 und der Reibkupplung 5 sowie vorzugsweise für das Ansteuern des Verbrennungsmotors 1 und der Reibkupplung 6. Die Steuerungseinrichtung 10 gibt diese Ausgangsgrößen über die Kommunikationsschnittstelle aus. Als Eingangsgrößen werden der Steuerungseinrichtung 10 zumindest ein das Verfahren auslösendes Signal, zum Beispiel eine fahrerseitige Schaltungsauslösung, und Eingangsdrehzahlen der zu synchronisierenden Welle des automatisierten Schaltgetriebes 3 bereitgestellt. Diese Eingangsgrößen liest die Steuerungseinrichtung 10 über die Kommunikationsschnittstelle ein oder ermittelt dieselben intern.

Bezugszeichen

| | |
|---|---|
| 1 | Verbrennungsmotor |
| 2 | elektrische Maschine |
| 3 | Getriebe |
| 4 | Abtrieb |
| 5 | Kupplung |
| 6 | Kupplung |
| 7 | Vorschaltgruppe |
| 8 | Hauptgetriebe |
| 9 | Nachschaltgruppe |
| 10 | Steuerungseinrichtung |

**Patentansprüche**

1. Verfahren zum Betreiben eines Antriebsstrangs eines Hybridfahrzeugs mit einem zumindest eine elektrische Maschine (2) und einen Verbrennungsmotor (1) umfassenden Hybridantrieb, wobei zwischen den Verbrennungsmotor (1) und einen Abtrieb (4) ein automatisiertes Schaltgetriebe (3) geschaltet ist, wobei die elektrische Maschine (2) über eine Reibkupplung (5) an eine Welle des automatisierten Schaltgetriebes (3) gekoppelt ist, und wobei in dem automatisierten Schaltgetriebe (3) unter Unterbrechung des vom Hybridantrieb an dem Abtrieb (4) bereitgestellten Antriebsmoments Schaltungen derart ausgeführt werden, dass zunächst in einer ersten Phase das am Abtrieb (4) bereitgestellte Antriebsmoment abgebaut, anschließend in einer zweiten Phase nach Abbau des Antriebsmoments die eigentliche Schaltung ausgeführt und darauffolgend in einer dritten Phase nach Ausführung der eigentlichen Schaltung am Abtrieb (4) Antriebsmoment wieder aufgebaut wird, wobei zum Ausführen der eigentlichen Schaltung nach einem Gangauslegen eines Ist-Gangs der Schaltung und vor einem Gangeinlegen eines Ziel-Gangs der Schaltung das automatisierte Schaltgetriebe (3) unter Ausnutzen einer Schwungmasse der elektrischen Maschine (2) derart synchronisiert wird, dass dann, wenn die Reibkupplung (5), über welche die elektrische Maschine (2) an das zu synchronisierende Schaltgetriebe (3) gekoppelt ist, geöffnet ist, die Drehzahl der elektrischen Maschine (2) auf eine Schwungdrehzahl gebracht wird, und dass darauffolgend die Reibkupplung (5), über welche die elektrische Maschine (2) an das zu synchronisierende Schaltgetriebe (3) gekoppelt ist, zur Schwungsynchronisierung des automatisierten Schaltgetriebes (3) zunächst geschlossen wird, **dadurch gekennzeichnet, dass** auschließend die Reibkupplung (5) mindestens teilweise wieder geöffnet wird. H

2. Verfahren nach Anspruch 1, **dadurch gekennzeichnet, dass** die Reibkupplung (5), über welche die elektrische Maschine (2) an eine zu synchronisierende Welle des zu synchronisierenden Schaltgetriebes (3) gekoppelt ist, nach dem Schließen derselben vor Beendigung der Synchronisierung dann geöffnet wird, wenn eine Drehzahldifferenz zwischen einer Drehzahl der zu synchronisierenden Welle des automatisierten Schaltgetriebes (3) und einer Synchrondrehzahl kleiner als ein Grenzwert ist.

3. Verfahren nach Anspruch 2, **dadurch gekennzeichnet, dass** hierbei zur Bestimmung eines Öffnungszeitpunkts für die Reibkupplung (5) ein Gradient der Drehzahldifferenz zwischen der Drehzahl der zu synchronisierenden Welle des zu synchronisierenden Schaltgetriebes (3) und der Synchrondrehzahl überwacht wird.

4. Verfahren nach einem der Ansprüche 1 bis 3, **dadurch gekennzeichnet, dass** die Reibkupplung (5) zur Schwungsynchronisierung der zu synchronisierende Welle des automatisierten Schaltgetriebes (3) zunächst unter Erhöhung des von derselben übertragbaren Moments zunächst derart geschlossen wird, dass dieselbe schlupfend ein Moment überträgt, und dass anschließend die Reibkupplung (5) derart vollständig geöffnet wird, dass das von derselben übertragbare Moment auf Null reduziert wird.

5. Verfahren nach einem der Ansprüche 1 bis 3, **dadurch gekennzeichnet, dass** die Reibkupplung (5) zur Schwungsynchronisierung der zu synchronisierende Welle des automatisierten Schaltgetriebes (3) zunächst unter Erhöhung des von derselben übertragbaren Moments derart geschlossen wird, dass dieselbe schlupfend ein Moment überträgt, und dass anschließend die Reibkupplung (5) derart teilweise geöffnet wird, dass das von derselben übertragbare Moment reduziert wird.

6. Verfahren nach einem der Ansprüche 1 bis 5, **dadurch gekennzeichnet, dass** während des Schließens der Reibkupplung (5), über welche die elektrische Maschine (2) an das zu synchronisierende Schaltgetriebe (3) gekoppelt ist, über die elektrische Maschine (2) ein Moment derart aufgebracht wird, dass mit Beendigung der Synchronisierung, also dann, wenn eine Drehzahldifferenz zwischen einer Drehzahl der zu synchronisierenden Welle des automatisierten Schaltgetriebes und einer Synchrondrehzahl kleiner als ein Grenzwert ist, an der Reibkupplung (5) eine definierte Differenzdrehzahl vorhanden ist.

7. Verfahren nach einem der Ansprüche 1 bis 6, **dadurch gekennzeichnet, dass** dann, wenn die Reibkupplung (5), über welche die elektrische Maschine an das zu synchronisierende Schaltgetriebe gekoppelt ist, unerwünscht zum Haften kommt, das von der elektrischen Maschine (2) bereitgestellte Moment derart korrigiert wird, dass die Reibkupplung (5) vor dem Einlegen des Ziel-Gangs der Schaltung schlupft.

8. Verfahren nach einem der Ansprüche 1 bis 7, **dadurch gekennzeichnet, dass** zur Schaltungsausführung zunächst das von der elektrischen Maschine (2) am Abtrieb (4) bereitgestellte Antriebsmoment unter Anpassung des vom Verbrennungsmotor (1) am Abtrieb (4) bereitgestellten Antriebsmoments abgebaut wird, dass darauffolgend dann, wenn die Reibkupplung (5), über welche die elektrische Maschine an das zu synchronisierende Schaltgetriebe (3) gekoppelt ist, geöffnet ist, die Drehzahl der elektrischen Maschine (2) auf eine Vorbereitungsdrehzahl gebracht wird, dass anschließend auch das von dem Verbrennungsmotor (1) am Abtrieb (4) bereitgestellte Antriebsmoment abgebaut wird, und dass dann, wenn auch das von dem Verbrennungsmotor (1) am Abtrieb bereitgestellte Antriebsmoment abgebaut ist, der Ist-Gang der Schaltung ausgelegt wird, wobei gleichzeitig mit oder unmittelbar nach dem Gangauslegen des Ist-Gangs der Schaltung die elektrische Maschine (2) auf die bei einer Rückschaltung oberhalb der Vorbereitungsdrehzahl liegende Schwungdrehzahl oder bei einer Hochschaltung unterhalb der Vorbereitungsdrehzahl liegende Schwungdrehzahl gebracht wird, und wobei dann, wenn die elektrische Maschine (2) die Schwungdrehzahl erreicht oder überschreitet bzw. unterschreitet, die Reibkupplung (5), über welche die elektrische Maschine an das zu synchronisierende Schaltgetriebe (3) gekoppelt ist, zur Schwungsynchronisierung der zu synchronisierende Welle des automatisierten Schaltgetriebes (3) geschlossen wird.

9. Verfahren nach einem der Ansprüche 1 bis 8, **dadurch gekennzeichnet, dass** die definierte Schwungdrehzahl $n_{SCHWUNG}$ unter Verwendung folgender Formel rechnerisch ermittelt wird:

$$n_{SCHWUNG} = \sqrt{\frac{(J_{EM} + J_{GE}) * n_{GE-ZIEL}^2 - J_{GE} * n_{GE-IST}^2}{J_{EM}}} + \Delta n_{SCHWUNG}$$

wobei $J_{EM}$ die Massenträgheit der elektrischen Maschine ist, wobei $J_{GE}$ die getriebeeingangsseitige Massenträgheit bezogen auf die zu synchronisierende Welle des automatisierten Schaltgetriebes ist, wobei $n_{GE-IST}$ die Eingangsdrehzahl der zu synchronisierenden Welle des automatisierten Schaltgetriebes im Ist-Gang der Schaltung ist, wobei $n_{GE-ZIEL}$ die Eingangsdrehzahl der zu synchronisierenden Welle des automatisierten Schaltgetriebes im Ziel-Gang der Schaltung ist, und wobei $\Delta n_{SCHWUNG}$ ein optionaler Korrekturoffsetwert ist.

10. Verfahren nach einem der Ansprüche 1 bis 8, **dadurch gekennzeichnet, dass** die definierte Schwungdrehzahl $n_{SCHWUNG}$ unter Verwendung folgender Formel rechnerisch ermittelt wird:

$$n_{SCHWUNG} = \frac{J_{GE}}{J_{EM}} * (n_{GE-ZIEL} - n_{GE-IST}) + n_{GE-ZIEL} + \Delta n_{SCHWUNG}$$

wobei $J_{EM}$ die Massenträgheit der elektrischen Maschine ist, wobei $J_{GE}$ die getriebeeingangsseitige Massenträgheit bezogen auf die zu synchronisierende Welle des automatisierten Schaltgetriebes ist, wobei $n_{GE-IST}$ die Eingangsdrehzahl der zu synchronisierenden Welle des automatisierten Schaltgetriebes im Ist-Gang der Schaltung ist, wobei $n_{GE-ZIEL}$ die Eingangsdrehzahl der zu synchronisierenden Welle des automatisierten Schaltgetriebes im Ziel-Gang der Schaltung ist, und wobei $\Delta n_{SCHWUNG}$ ein optionaler Korrekturoffsetwert ist.

**11.** Verfahren nach Anspruch 9 oder 10, **dadurch gekennzeichnet, dass** mit dem Korrekturoffsetwert bei einer Hochschaltung die definierte Schwungdrehzahl reduziert und bei einer Rückschaltung die definierte Schwungdrehzahl erhöht wird.

**12.** Verfahren nach einem der Ansprüche 1 bis 11, **dadurch gekennzeichnet, dass** als zu synchronisierende Welle des automatisierten Schaltgetriebes (3) eine Getriebeeingangswelle synchronisiert wird, an welche auch der Verbrennungsmotor insbesondere über eine Kupplung gekoppelt ist.

**13.** Verfahren nach einem der Ansprüche 1 bis 11, **dadurch gekennzeichnet, dass** als zu synchronisierende Welle des automatisierten Schaltgetriebes (3) eine Vorgelegewelle eines automatisierten Gruppenschaltgetriebes synchronisiert wird, wobei der Verbrennungsmotor an eine Getriebeeingangswelle des automatisierten Gruppenschaltgetriebes insbesondere über eine Kupplung gekoppelt ist.

**14.** Steuerungseinrichtung (10) eines Hybridfahrzeugs, **gekennzeichnet durch** Mittel zur Durchführung des Verfahrens nach einem der Ansprüche 1 bis 13.


## Claims

**1.** Method for operating a drive train of a hybrid vehicle having a hybrid drive comprising at least one electric machine (2) and an internal combustion engine (1), wherein an automated transmission (3) is connected between the internal combustion engine (1) and an output (4), wherein the electric machine (2) is coupled via a friction clutch (5) to a shaft of the automated transmission (3), and wherein shifting operations are carried out in the automated transmission (3) by interrupting the drive torque made available at the output (4) by the hybrid drive, in that firstly in a first phase the drive torque which is made available at the output (4) is reduced, subsequently in a second phase after reduction of the drive torque the actual shifting operation is carried out and subsequently in a third phase, after the execution of the actual shifting operation, drive torque is increased again at the output (4), wherein in order to carry out the actual shifting operation after the disengagement of an actual gear speed of the shifting operation and before an engagement of a target gear speed of the shifting operation the automated transmission (3) is synchronized, by utilizing an oscillating mass of the electric machine (2), in such a way that when the friction clutch (5) via which the electric machine (2) is coupled to the transmission (3) to be synchronized is opened, the rotational speed of the electric machine (2) is adjusted to an oscillating rotational speed, and in that subsequently the friction clutch (5) via which the electric machine (2) is coupled to the transmission (3) to be synchronized is firstly closed in order to synchronize the oscillation of the automated transmission (3), **characterized in that** the friction clutch (5) is then at least partially opened again.

**2.** Method according to Claim 1, **characterized in that** the friction clutch (5) via which the electric machine (2) is coupled to a shaft to be synchronized of the transmission (3) which is to be synchronized is opened after the closing of said friction clutch (5) before the ending of the synchronization when a rotational speed difference between the rotational speed of the shaft, to be synchronized, of the automated transmission (3) and a synchronizing rotational speed is less than a limiting value.

**3.** Method according to Claim 2, **characterized in that** in this context a gradient of the rotational speed difference between the rotational speed of the shaft, to be synchronized, of the transmission (3) which is to be synchronized and the synchronizing rotational speed is monitored in order to determine an opening time for the friction clutch (5).

**4.** Method according to one of Claims 1 to 3, **characterized in that**, in order to synchronize the oscillation of the shaft, to be synchronized, of the automated transmission (3), the friction clutch (5) is firstly closed, while increasing the torque which can be transmitted thereby, in such a way that said friction clutch (5) transmits a torque in a slipping fashion, and **in that** the friction clutch (5) is then completely opened in such a way that the torque which can be transmitted via said friction clutch (5) is reduced to zero.

**5.** Method according to one of Claims 1 to 3, **characterized in that**, in order to synchronize the oscillation of the shaft, to be synchronized, of the automated transmission (3), the friction (5) is firstly closed, while increasing the torque which can be transmitted by said friction clutch (5), in such a way that said friction clutch (5) transmits a torque in a slipping fashion, and **in that** the friction clutch (5) is then partially opened in such a way that the torque which can be transmitted by said friction clutch (5) is reduced.

6. Method according to one of Claims 1 to 5, **characterized in that** during the closing of the friction clutch (5) via which the electric machine (2) is coupled to the transmission (3) to be synchronized, a torque is applied via the electric machine (2) in such a way that when the synchronization ends, that is to say when a rotational speed difference between a rotational speed of the shaft, to be synchronized, of the automated transmission and a synchronizing rotational speed is lower than a limiting value, a defined differential rotational speed is present at the friction clutch (5).

7. Method according to one of Claims 1 to 6, **characterized in that** when the friction clutch (5) via which the electric machine is coupled to the transmission which is to be synchronized undesirably begins to stick, the torque which is made available by the electric machine (2) is corrected in such a way that the friction clutch (5) slips before the engagement of the target gear speed of the shifting operation.

8. Method according to one of the Claims 1 to 7, **characterized in that**, in order to carry out the shifting operation, the drive torque which is made available at the output (4) by the electric machine (2) is firstly reduced by adapting the drive torque which is made available at the output (4) by the internal combustion engine (1) **in that** subsequently, when the friction clutch (5) via which the electric machine is coupled to the transmission (3) which is to be synchronized is opened, the rotational speed of the electric machine (2) is adjusted to a preparatory rotational speed, **in that** the drive torque which is made available at the output (4) by the internal combustion engine (1) is then also reduced, and **in that** when the drive torque which is made available at the output by the internal combustion engine (1) is also reduced, the actual gear speed of the shifting operation is disengaged, wherein at the same time as or directly after the disengagement of the actual gear speed of the shifting operation the electric machine (2) is adjusted to the oscillating rotational speed which is above the preparatory rotational speed during a shifting down operation or the oscillating rotational speed which is below the preparatory rotational speed during a shifting up operation, and wherein when the electric machine (2) has reached or exceeded or undershot the oscillating rotational speed, the friction clutch (5) via which the electric machine is coupled to the transmission (3) to be synchronized is closed in order to synchronize the oscillation of the shaft, to be synchronized, of the automated transmission (3).

9. Method according to one Claims 1 to 8, **characterized in that** the defined oscillating rotational speed $n_{OSC}$ is determined by a calculation using the following formula:

$$n_{OSC} = \sqrt{\frac{\left(J_{MI} + J_{TRNS}\right) * n_{TRNS-TARG}^2 - J_{TRNS} * n_{TRNS-ACT}^2}{J_{MI}}} + \Delta n_{OSC}$$

wherein $J_{MI}$ is the mass inertia of the electric machine, wherein $J_{TRANS}$ is the transmission-input-side mass inertia with respect to the shaft, to be synchronized, of the automated transmission, wherein $n_{TRANS-ACT}$ is the input rotational speed of the shaft, to be synchronized, of the automated transmission in the actual gear speed of the shifting operation, wherein $n_{TRANS-TARG}$ is the input rotational speed of the shaft, to be synchronized, of the automated transmission in the target gear speed of the shifting operation, and wherein $\Delta n_{TRANS}$ is an optional correction offset value.

10. Method according to one of Claims 1 to 8, **characterized in that** the defined oscillating rotational speed $n_{OSC}$ is determined by a calculation using the following formula:

$$n_{OSC} = \frac{J_{TRANS}}{J_{MI}} * \left(n_{TRANS-TARG} - n_{TRANS-ACT}\right) + n_{TRANS-TARG} + \Delta n_{OSC}$$

wherein $J_{MI}$ is the mass inertia of the electric machine, wherein $J_{TRANS}$ is the transmission-input-side mass inertia with respect to the shaft, to be synchronized, of the automated transmission, wherein $n_{TRANS-ACT}$ is the input rotational speed of the shaft, to be synchronized, of the automated transmission in the actual gear speed of the shifting operation, wherein $n_{TRANS-TARG}$ is the input rotational speed of the shaft, to be synchronized, of the automated transmission in the target gear speed of the shifting operation, and wherein $\Delta n_{TRANS}$ is an optional correction offset value.

11. Method according to Claim 9 or 10, **characterized in that** the defined oscillating rotational speed is reduced with the correction offset value in the case of a shifting up operation and in the case of a shifting down operation the defined oscillating rotational speed is increased.

**12.** Method according to one of Claims 1 to 11, **characterized in that** a transmission input shaft, to which the internal combustion engine is also coupled, in particular, via a clutch, is synchronized as the shaft, to be synchronized, of the automated transmission (3).

**13.** Method according to one of Claims 1 to 11, **characterized in that** a lay shaft of an automated group transmission is synchronized as the shaft, to be synchronized, of the automated transmission (3), wherein the internal combustion engine is coupled to a transmission input shaft of the automated group transmission, in particular via a clutch.

**14.** Control device (10) of a hybrid vehicle, **characterized by** means for carrying out the method according to one of Claims 1 to 13.


**Revendications**

**1.** Procédé pour faire fonctionner un groupe motopropulseur d'un véhicule hybride avec un entraînement hybride comprenant au moins un moteur électrique (2) et un moteur à combustion interne (1), dans lequel une boîte de vitesses automatique (3) est montée entre le moteur à combustion interne (1) et une sortie (4), dans lequel le moteur électrique (2) est accouplé, via un embrayage à friction (5), à un arbre de la boîte de vitesses automatique (3) et dans lequel des changements de rapport sont effectués dans la boîte de vitesses automatique (3) en interrompant le couple d'entraînement mis à disposition sur la sortie (4) par l'entraînement hybride d'une manière telle, que dans une première phase, le couple d'entraînement mis à disposition sur la sortie (4) soit tout d'abord réduit, puis que dans une deuxième phase après la réduction du couple d'entraînement, le changement de rapport proprement dit soit effectué et qu'ensuite, dans une troisième phase après avoir effectué le changement de rapport proprement dit, couple d'entraînement soit de nouveau développé sur la sortie (4), dans lequel, pour effectuer le changement de rapport proprement dit, après un désengagement de rapport d'un rapport effectif du changement de rapport et avant un engagement de rapport d'un rapport cible du changement de rapport, la boîte de vitesses automatique (3) est synchronisée en utilisant une masse d'inertie du moteur électrique (2) d'une manière telle, que lorsque l'embrayage à friction (5) via lequel le moteur électrique (2) est accouplé à la boîte de vitesses (3) synchronisée est ouvert, la vitesse de rotation du moteur électrique (2) soit amenée à une vitesse de rotation inertielle, et qu'ensuite l'embrayage à friction (5) via lequel le moteur électrique (2) est accouplé à la boîte de vitesses (3) à synchroniser est tout d'abord fermé pour la synchronisation inertielle de la boîte de vitesses automatique (3), **caractérisé en ce qu'**ensuite, l'embrayage à friction (5) est au moins partiellement de nouveau ouvert.

**2.** Procédé selon la revendication 1, **caractérisé en ce que** l'embrayage à friction (5) par l'intermédiaire duquel le moteur électrique (2) est accouplé à un arbre à synchroniser de la boîte de vitesses (3) à synchroniser, après la fermeture de ce même, est ouvert avant la fin de la synchronisation lorsqu'une différence de vitesses de rotation entre une vitesse de rotation de l'arbre à synchroniser de la boîte de vitesses automatique (3) et une vitesse de rotation synchrone est inférieure à une valeur limite.

**3.** Procédé selon la revendication 2, **caractérisé en ce que**, pour la détermination d'un moment d'ouverture pour l'embrayage à friction (5), on surveille un gradient de la différence de vitesses de rotation entre la vitesse de rotation de l'arbre à synchroniser de la boîte de vitesse (3) à synchroniser et la vitesse de rotation synchrone.

**4.** Procédé selon l'une des revendications 1 à 3, **caractérisé en ce que** l'embrayage à friction (5), pour la synchronisation inertielle de l'arbre à synchroniser de la boîte de vitesses automatique (3), est tout d'abord fermé en augmentant tout d'abord le couple pouvant être transmis par celui-ci d'une manière telle que celui-ci transmet un couple par glissement et **en ce que** l'embrayage à friction (5) est ensuite complètement ouvert d'une manière telle, que le couple pouvant être transmis par celui-ci est réduit à zéro.

**5.** Procédé selon l'une des revendications 1 à 3, **caractérisé en ce que** l'embrayage à friction (5), pour la synchronisation inertielle de l'arbre à synchroniser de la boîte de vitesses automatique (3), est tout d'abord fermé en augmentant le couple pouvant être transmis par celui-ci d'une manière telle, que celui-ci transmet un couple par glissement et **en ce que** l'embrayage à friction (5) est ensuite partiellement ouvert d'une manière telle, que le couple pouvant être transmis par celui-ci est réduit.

**6.** Procédé selon l'une des revendications 1 à 5, **caractérisé en ce que**, pendant la fermeture de l'embrayage à friction (5) par l'intermédiaire duquel le moteur électrique (2) est accouplé à la boîte de vitesses (3) à synchroniser, un couple est appliqué par l'intermédiaire du moteur électrique (2) d'une manière telle, qu'à la fin de la synchronisation, à savoir lorsqu'une différence de vitesses de rotation entre une vitesse de rotation de l'arbre à synchroniser de la boîte de vitesses automatique et une vitesse de rotation synchrone est inférieure à une valeur limite, il existe une différence de vitesses de rotation définie au niveau de l'embrayage à friction (5).

7. Procédé selon l'une des revendications 1 à 6, **caractérisé en ce que**, lorsque l'embrayage à friction (5) par l'intermédiaire duquel le moteur électrique est accouplé à la boîte de vitesses à synchroniser adhère de manière non souhaitée, le couple mis à disposition par le moteur électrique (2) est corrigé d'une manière telle, qu'avant l'engagement du rapport cible du changement de rapport, l'embrayage à friction (5) se met à patiner.

8. Procédé selon l'une des revendications 1 à 7, **caractérisé en ce que**, pour effectuer le changement de rapport, le couple d'entraînement mis à disposition sur la sortie (4) par le moteur électrique (2) est tout d'abord réduit en adaptant le couple d'entraînement mis à disposition sur la sortie (4) par le moteur à combustion interne (1), **en ce qu'**ensuite, lorsque l'embrayage à friction (5) par l'intermédiaire duquel le moteur électrique est accouplé à la boîte de vitesses (3) à synchroniser est ouvert, on fait passer la vitesse de rotation du moteur électrique (2) à une vitesse de rotation de préparation, **en ce que** l'on réduit ensuite également le couple d'entraînement mis à disposition sur la sortie (4) par le moteur à combustion interne (1) et **en ce que**, lorsque le couple d'entraînement mis à disposition sur la sortie par le moteur à combustion interne (1) est également réduit, on désengage le rapport effectif du changement de rapport, dans lequel, en même temps que le désengagement de rapport du rapport effectif ou directement après celui-ci, on fait passer le moteur électrique (2) à la vitesse de rotation inertielle se situant au-dessus de la vitesse de rotation de préparation en cas d'une rétrogradation de rapport ou bien à la vitesse de rotation inertielle se situant en-dessous de la vitesse de rotation de préparation en cas d'enclenchement d'un rapport supérieur, et dans lequel, lorsque le moteur électrique (2) atteint la vitesse de rotation inertielle ou dépasse celle-ci par le haut ou par le bas, l'embrayage à friction (5) par l'intermédiaire duquel le moteur électrique est accouplé à la boîte de vitesses à synchroniser (3) est fermé pour la synchronisation inertielle de l'arbre à synchroniser de la boîte de vitesses automatique (3).

9. Procédé selon l'une des revendications 1 à 8, **caractérisé en ce que** la vitesse de rotation inertielle $n_{SCHWUNG}$ définie est déterminée par calcul en utilisant la formule suivante :

$$n_{SCHWUNG} = \sqrt{\frac{(J_{EM} + J_{GE}) * n_{GE-ZIEL}^2 - J_{GE} * n_{GE-IST}^2}{J_{EM}}} + \Delta n_{SCHWUNG}$$

dans laquelle $J_{EM}$ est l'inertie de masse du moteur électrique, dans laquelle $J_{GE}$ est l'inertie de masse côté entrée de boîte de vitesses compte tenu de l'arbre à synchroniser de la boîte de vitesses automatique, dans laquelle $n_{GE-IST}$ est la vitesse de rotation d'entrée de l'arbre à synchroniser de la boîte de vitesses automatique dans le rapport effectif du changement de rapport, dans laquelle $n_{GE-ZIEL}$ est la vitesse de rotation d'entrée de l'arbre à synchroniser de la boîte de vitesses automatique dans le rapport cible du changement de rapport, et dans laquelle $\Delta n_{SCHWUNG}$ est une valeur optionnelle de correction d'écart.

10. Procédé selon l'une des revendications 1 à 8, **caractérisé en ce que** la vitesse de rotation inertielle $n_{SCHWUNG}$ définie est déterminée par calcul en utilisant la formule suivants :

$$n_{SCHWUNG} = \frac{J_{GE}}{J_{EM}} * (n_{GE-ZIEL} - n_{GE-IST}) + n_{GE-ZIEL} + \Delta n_{SCHWUNG}$$

dans laquelle $J_{EM}$ est l'inertie de masse du moteur électrique, dans laquelle $J_{GE}$ est l'inertie de masse côté entrée de boîte de vitesses compte tenu de l'arbre à synchroniser de la boîte de vitesses automatique, dans laquelle $n_{GE-IST}$ est la vitesse de rotation d'entrée de l'arbre à synchroniser de la boîte de vitesses automatique dans le rapport effectif du changement de rapport, dans laquelle $N_{GE-ZIEL}$ est la vitesse de rotation d'entrée de l'arbre à synchroniser de la boîte de vitesses automatique dans le rapport cible du changement de rapport, et dans laquelle $\Delta n_{SCHWUNG}$ est une valeur optionnelle de correction d'écart.

11. Procédé selon la revendication 9 ou 10, **caractérisé en ce que**, avec la valeur de correction d'écart, on réduit la vitesse de rotation inertielle définie en cas d'enclenchement de rapport supérieur et augmente la vitesse de rotation inertielle définie en cas d'une rétrogradation de rapport.

**12.** Procédé selon l'une des revendications 1 à 11, **caractérisé en ce que** l'on synchronise, en guise d'arbre à synchroniser de la boîte de vitesses automatique (3), un arbre d'entrée de boîte de vitesses auquel le moteur à combustion interne est également accouplé en particulier par l'intermédiaire d'un embrayage.

**13.** Procédé selon l'une des revendications 1 à 11, **caractérisé en ce que**, en guise d'arbre à synchroniser de la boîte de vitesses automatique (3), on synchronise un arbre intermédiaire d'une boîte de vitesses automatique de groupe, dans lequel le moteur à combustion interne est accouplé à un arbre d'entrée de boîte de vitesses de la boîte de vitesses automatique de groupe en particulier par l'intermédiaire d'un embrayage.

**14.** Dispositif de commande (10) d'un véhicule hybride, **caractérisé par** des moyens pour la mise en oeuvre du procédé selon l'une des revendications 1 à 13.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011141233 A1